Europäisches Patentamt

European Patent Office

Office européen des brevets

(19)

(11) Publication number: **0 388 751**

**A1**

## (12) EUROPEAN PATENT APPLICATION

(21) Application number: **90104647.4**

(22) Date of filing: **12.03.90**

(51) Int. Cl.⁵: **A21B 3/04, F24C 15/20**

(30) Priority: **21.03.89 IT 4571589**

(43) Date of publication of application:
**26.09.90 Bulletin 90/39**

(84) Designated Contracting States:
**DE ES FR GB IT**

(71) Applicant: **ZANUSSI GRANDI IMPIANTI S.p.A.**
**Viale Treviso 15**
**I-33170 Pordenone(IT)**

(72) Inventor: **Tassan Mangina, Franco**
**Via Ceros 2**
**I-33080 Masure de Aviano, Pordenone(IT)**
Inventor: **Padovan, Silvano**
**Via Ceolini 58**
**I-33080 Porcia, Pordenone(IT)**
Inventor: **Del Fabro, Claudio**
**Via Veneto 1**
**I-33080 Porcia, Pordenone(IT)**

(74) Representative: **Giugni, Valter et al**
**PROPRIA Protezione Proprietà Industriale**
**S.p.A. Via Mazzini 13**
**I-33170 Pordenone(IT)**

(54) **Forced convection cooking oven.**

(57) Forced convection cooking oven normally provided with gas or electric heating of foods, comprising a metallic box-like envelope (7) defining a cooking room (8) in which the foods to be cooked are put and subdivided by a partition wall (10) in an inner room (9) accomodating a fan (19) and the gas or electric heating means (21) for providing a circulation of hot air within the cooking room (8).

Oven comprising also two separated conduits (24,25) respectively communicating with the cooking room and the inner room (9) for determining an air exchange in the same cooking room during operation of fan (19), respectively by suction of outer air and exhausting of damp air, with consequent regulation of moisture content in the same cooking room during the course of particular oven cooking cycles (gratin, bread-making etc...).

Moreover, the discharge conduit (25) may be also shaped as vapours condenser and the so formed condensate is collected and discharged outside the oven through a manifold (29) and a siphon-shaped conduit (31).

# FORCED CONVECTION COOKING OVEN

The invention refers to a forced convection cooking oven, indirectly gas or electric heated, which is so designed as to maintain the moisture inside the oven cooking room within preestablished levels during the foods cooking cycles, so as to ensure a satisfactory cooking of different kind of foods.Forced convection cooking ovens with indirect gas or electric heating of foods are known, substantially comprising a metallic box-like envelope defining an inner room for cooking foods, subdivided by a partition wall provided with a central circular opening in a manner to form a further inner room, delimited between said partition wall and the opposite oven back wall, in which a fan is accomodated at the level of the central opening of the partition wall, which fan can be driven in rotation by an electric motor disposed outside the oven casing and is enclosed by a tubular conduit, connected to an upper stack and crossed by the burnt gases generated by the combustion of gas in a burner disposed within a firebox, communicating with said tubular conduit.

In this way, such fan, which in the ca se of the electric cooking oven is enclosed by electric heating elements connectable to the electric circuit of the same oven, provides for determining a flow of heated air within the cooking room of each oven, by passing through said tubular conduits or said electric heating elements, with consequent cooking of foods disposed inside such cooking room.

Moreover, these cooking ovens may be also connected to an eventual separated steam generator communicating with the cooking room of the same ovens as well as to an exhaust conduit connected to the bottom side of said cooking room, respectively for introducing metered amounts of steam inside the same room so as to determine an effective cooking of foods, and for discharging such steam outside the oven, or in case the associated condensate thereof obtained by condensation of steam in a condenser associated with the cooking oven, during each selected cooking cycle.

The cooking ovens of this kind operate in a satisfactory and reliable way, however they are critical during particular cooking steps (i.e. gratin, bread-making), in which the foods to be cooked which are too damp develop considerable amounts of steam which, during each selected cooking cycle, aren't fully exhausted from the cooking room, thus maintaining the foods in an excessively damp ambient which negatively affects the flavour and the quality of the same foods, which result to be watery.

Besides, since the larger part of the present cooking ovens is unprovided with suitable devices preventing the gases or vapours present in the discharging systems to which such ovens are connected from being undesiderately sucked therefrom, it follows the further drawback that such gases or vapours arrive at the inside of the cooking room of the same ovens, thereby causing the ambient for cooking foods to become antihygienic.

Therefore, it is the scope of the present invention to overcome the drawbacks and the critical aspects of the present cooking ovens of the specified kind, by means of a forced convection cooking oven so designed as to permit any one cooking cycle of foods to be performed in a satisfactory way, particularly in the cases in which the foods develop considerable amounts of steam, thus allowing considerable amounts of steam to be disposed of the cooking room.

The cooking oven referred to is substantially realized with the constructive features described in the attached claims of the patent.

The invention will be better understood from the following description, given solely by way of a not limitative example and with reference to the accompanying drawings, in which:

Fig. 1 schematically shows a plan view of the cooking oven according to the invention, in a first embodiment thereof;

Fig. 2 shows a side view of the oven of fig. 1, cut along the line A-A;

Fig. 3 schematically shows a plan view of the cooking oven according to the invention, in a second embodiment thereof;

Fig. 4 shows a longitudinal view of the oven of fig. 3, cut along the line B-B;

Fig. 5 schematically shows a cut longitudinal view of the cooking oven according to the invention, in a further embodiment thereof.

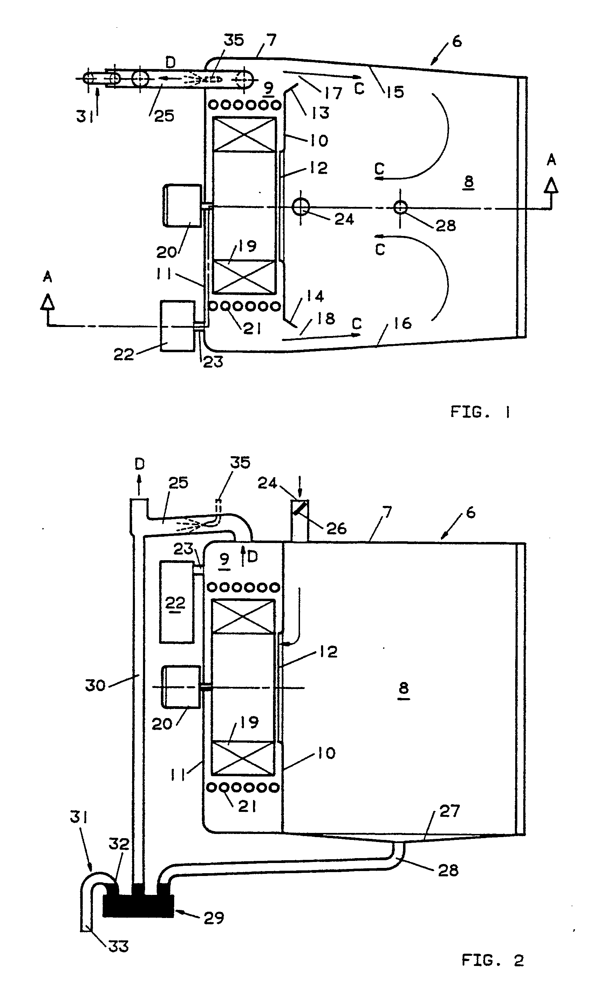

With reference to fig. 1 and 2, it is schematically illustrated a forced convection cooking oven 6, with gas or electric heating of foods, which may be utilized preferably for community kitchens, such oven comprising substantially a metallic box-like envelope 7 defining an inner cooking room 8 in which the foods to be cooked are disposed, by laying them on suitable shelfs (not shown) placed one upon another, which room in turn is subdivided in a further inner room 9 by a partition wall 10, spaced from the opposite back wall 11 of said oven and provided with a central circular opening 12 and vertical end edges 13 and 14, slightly folded toward inside of the cooking room 8 and shifted with respect to the corresponding side walls 15 and 16 of the same oven thus forming openings 17 and 18 for circulation of hot air in the cooking room.

Inside the inner room 9 a fan 19 is accomodated, which is driven in rotation by a coaxial electric motor 20 disposed outside against the oven back wall 11, said fan being laterally delimited by a tubular conduit 21 disposed at a closer distance from the circumferential edge of the same fan, which conduit is connected to an upper stack (not shown) and crossed by the burnt gases generated by the gas combustion of a burner, disposed in an underlying firebox of the oven and communicating with said tubular conduit (the burner and the firebox aren't shown). In alternative, in the case of an electric heated cooking oven, such fan is concentrically enclosed by helically wound electric heating elements, instead of the tubular conduit, which elements are connected to the electric circuit of the oven.

In this manner, in both cases operation in rotation of the fan causes an air flow, which air is heated by heat produced either by the tubular conduit 21 or by the electric heating element, and flowing in the cooking room in the direction indicated by the arrows C, with consequent progressive heating of foods put in the same cooking room.

Further, the present cooking oven may be connected also to an eventual separated steam generator 22 of per se known kind, intercommunicating through a conduit 23 with the cooking room 8, in order to provide for cooking foods by inlet of metered amounts of steam inside such cooking room, or by the combined action of the steam and of the forced hot air circulation.

In order to permit an effective cooking of foods during the course of particular cooking steps (i.e. gratin, bread-making etc...), where the too damp foods to be cooked develop considerable amounts of steam, the present cooking oven is sub stantially provided with at least two upper conduits 24 and 25, respectively vertical and horizontal, communicating with the cooking room 8 and the inner room 9 and respectively provided for determining a controlled suction of outer air toward the cooking room and a discharge outwards of damp air contained in the cooking room.

Since during operation of fan such rooms undergo different, pressures thus it is obtained a circulation of outer air through the cooking room 8 thanks to such pressure differential.

In particular, the conduit 24 is intercepted by a regulating element 26 as a valve member or the like, manually or automatically operable in different positions so as to vary within a preestablished range the inflow cross section of the conduit 24 and therefore the amount of air being sucked into the cooking room 8 by the fan 19 during the selected cooking cycle.

Consequently, the thus sucked air is mixed in advance to the damp air contained within the cooking room 8 and afterwards discharged outwards, thanks to the action of the fan 19, by passing through the conduit 25 which is fitted to the oven ceiling and disposed in an inclined position with respect to this latter. This cycle step is performed during the effective cooking of food, by displacing the valve member 26 in a convenient position thereof and providing switching on of the fan 19 for the entire duration of the respectively selected cooking cycle, so as to allow an effective air exchange within the cooking room 8, so that the moisture level therein is maintained within preestablished limits, in which condition the quality and natural flavour of foods are maintained.

In order to permit the condensate formed into the cooking room 8 and collected on the inclined bottom side 27 thereof during the cooking cycle of foods to be discharged therefrom, the present cooking oven is also provided with a drain conduit 28 connected below such bottom side 27 and communicating with an underlying rectilinear collecting manifold 29, with tubular form or any other geometric form, whose ends are closed and respectively connected to a vertical rectilinear conduit 30 turned upwards and connected to the previously described conduit 25, as well as to a further conduit 31 elbow-folded so as to form a siphon, whose rising branch 32 and descending branch 33 are respectively connected to the collecting manifold 29 and communicating with a separated draining system, situated below the oven (not shown).

In this manner, the condensate water and/or the eventual liquids of various kind formed during the cooking cycle or used for cleaning the oven cooking room 8, collect into the manifold 29 and, as soon as the level thereof is so raised as to initiate operation of the siphon, they are discharged to the underlying draining system.

The presence of both the manifold 29 and the siphon referred to, which are filled up with quantities, also smallest, of condensate and/or of above specified liquids, prevent the vapours which are exhausted outside the oven through the conduit 25 during the switching on period of the fan 19, for air exchange in the cooking room 8, from being undesiderately re-sucked, due to the action of the fan, through the conduits 25 and 30 as well as the descending branch 33 of said siphon and of the conduit 28 and penetrate into the same cooking room, thus making it practically impossible to attain the required moisture content and adequate hygienic conditions within said room.

Finally, the cooking oven referred to may also provide for condensing, partially or completely, the vapours exhausted through the conduit 25, by shaping in such case said conduit as a condenser thanks to the introduction therein of a suitable nozzle 35 for spraying cold water on the exhausted hot vapours, which nozzle advantageously is so positioned as to spray water in the same flowing direction of vapours (arrows D), so as to obtain the highest condensing efficiency of these latter, such nozzle being also able to be positioned-for spraying water also with angular positions different with respect to such flowing direction of vapours.

Therefore, in such circumstances the so obtained condensate is collected and conveyed through the vertical conduit 30 toward the underlying manifold 29, from which it is subsequently discharged in the previously described manner.

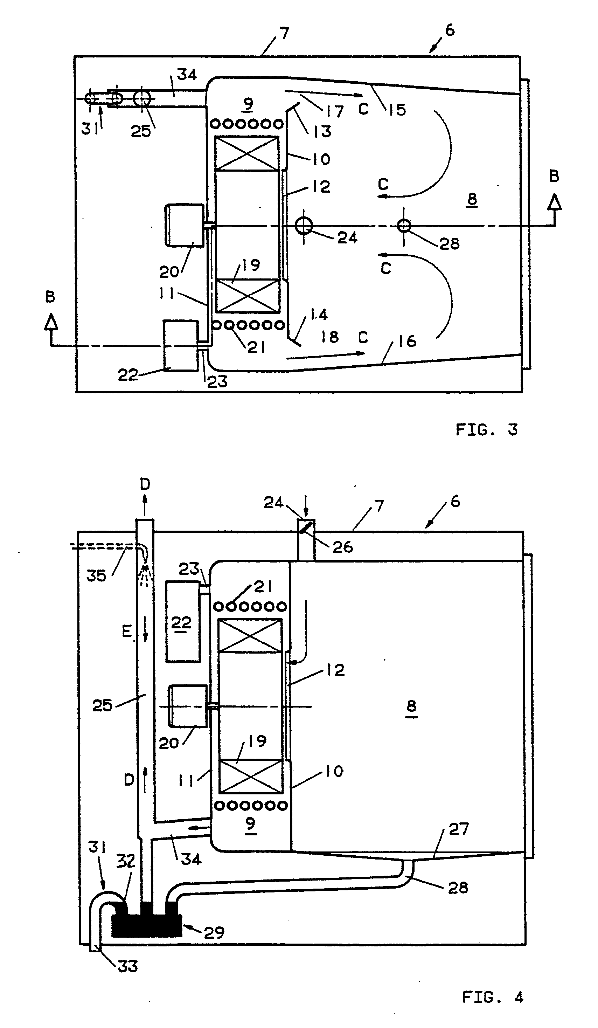

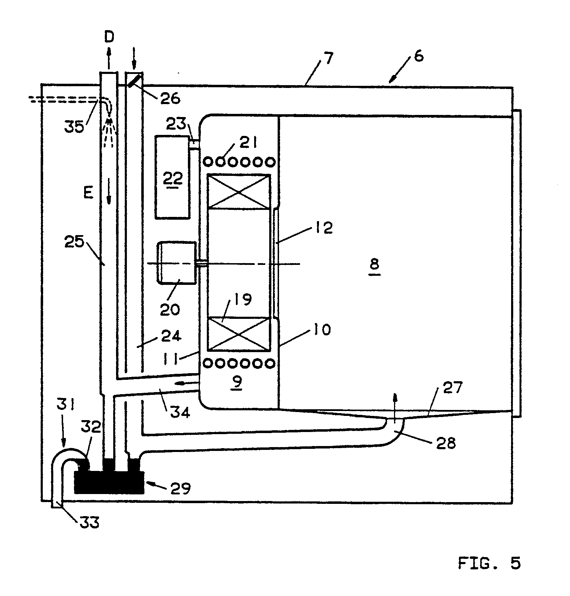

Now, by considering the fig. 3 and 4, it is shown a possible constructive variant of the cooking oven according to the invention, which is substantially constituted by the same component parts of the preceding oven, which parts therefore are marked with the same reference numerals.

However, in this case the oven envelope 7 is so designed as to accomodate also the eventual steam generator 22, the motor 20 of the fan 19 and the vapours discharging conduit 25 (which is disposed vertical instead of inclined, as in the previous case) and communicating with both the inner room 9 through a short conduit 34 and the manifold 29 and the siphon-shaped conduit 31.

As previously, also in this case the vapours discharging conduit 25 may act as a condenser by providing the nozzle 35 on the upper part thereof and in such case spraying water in counter-current (direction E) with respect to the flowing direction D of vapours, said conduit being also able to convey downwardly the thus formed condensate up to the siphon-shaped conduit 31, which therefore can discharge outwardly thereof.

Finally, referring now to fig. 5 it is shown a further possible constructive variant of the present cooking oven, which is constituted as the oven of fig.3 and 4 and differs therefrom in that the air suction conduit 24 is provided separately and communicates with both the hermetically sealed cooking room 8, through the manifold 29, and the siphon-shaped conduit 31. In this way, the manifold 29 carries out the double function of permitting flowing of sucked air toward the oven cooking room 8, for regulating the moisture content in the same room, and discharging of the condensate and/or the eventual liquids from such room toward outside, through the siphon-shaped conduit 31.

## Claims

1. Forced convection cooking oven, preferably utilizable for community kitchens, comprising a metallic box-like envelope containing a foods cooking room, subdivided by a partition wall in an inner room in which at least a fan and gas or electric heating means are accomodated, for determining the circulation of hot air for heating foods, as well as comprising an eventual per se known kind of steam generator communicating with said cooking room for admitting steam for cooking foods therein, characterized in that it comprises also at least a first (24) and a second conduit (25) respectively communicating with said cooking room (8) and said inner room (9) and able to determine in combination with said fan (19) an air exchange within the same cooking room, and comprises collecting and discharging means (29,31) communicating below said cooking room (8) and able to discharge outside the condensate and the eventual liquids collected on the bottom side (27) of the same room.

2. Cooking oven according to claim 1, characterized in that said first conduit (24) is intercepted by a regulating element (26) of per se known kind, which is operable manually and automatically in different positions for varying the inflow cross-section of said conduit (24) within a predetermined range.

3. Cooking oven according to claim 1, characterized in that said second conduit (25) may be provided with an eventual nozzle (35), introduced therein and able to spray cold water for condensing partially or completely the hot vapours discharged through said conduit (25).

4. Cooking oven according to claim 1, characterized in that said collecting and discharging means comprise at least one manifold (29) communicating below said bottom side (27) and said second conduit (25) as well as a siphon-shaped conduit (31) whose rising branch (32) and descending branch (33) are respectively connected the one to said manifold (29) and the other one communicating with outside of the oven.

FIG. 1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 478 484 (L. WANSON)<br>* Whole document *<br>--- | 1-3 | A 21 B 3/04<br>F 24 C 15/20 |
| A | EP-A-0 235 061 (R. VOEGTLIN)<br>* Whole document *<br>--- | 1-3 | |
| A | DE-A-3 715 132 (R. SCHWAN)<br>* Column 5, line 33 - column 5, line 48; figures 1-3 *<br>--- | 1,3 | |
| A | US-A-4 771 163 (R. THIBOUTOT)<br>--- | | |
| A | DE-A-3 643 299 (A. BREMER)<br>--- | | |
| A | DE-U-8 716 911 (BOSCH SIEMENS HAUSGERÄTE GmbH)<br>--- | | |
| A | DE-U-8 808 218 (H. DAUB)<br>--- | | |
| A | EP-A-0 290 925 (H. FLEISCHMANN et al.)<br>--- | | |
| A | EP-A-0 244 538 (B. MILLER)<br>----- | | **TECHNICAL FIELDS SEARCHED (Int. Cl.5)**<br><br>A 21 B<br>F 24 C |

The present search report has been drawn up for all claims

| Place of search | Date of completion of the search | Examiner |
|---|---|---|
| THE HAGUE | 05-06-1990 | FRANKS N.M. |

EPO FORM 1503 03.82 (P0401)